# EUROPEAN PATENT SPECIFICATION

(11) **EP 1 522 446 B1**
(45) Date of publication and mention of the grant of the patent: **06.08.2008**
(21) Application number: 03022411.7
(22) Date of filing: 07.10.2003
(51) Int. Cl.: B60J 11/00

(54) **Protective shield for cars against hail**
Schutzschild für Kraftfahrzeuge gegen Hagel
Ecran de protection pour véhicules contre des chutes de grêle

(43) Date of publication of application: 13.04.2005
(73) Proprietor: Lamec Majer di Majer Edoardo, 31026 Sarmede (TV) (IT)
(72) Inventor: Majer, Edoardo, 31026 Sarmede (TV) (IT)
(74) Representative: Gustorf, Gerhard

(56) References cited:
- AT-B- 190 815
- AU-B- 724 718
- DE-U- 7 605 886
- SU-A- 614 976
- US-A- 5 857 477

## Description

The present patent pertains to protective covers for cars and in particular it concerns a new cover for protecting cars and vehicles in general against hail.

Cars are continuously exposed to inclement weather, both when running and when parked in public areas.

Car bodywork is studied and constructed in such a way as to resist the elements, such as frost, rain and sun, but they are affected by the action of hail.

Small hailstones with modest kinetic energy bounce off the bodywork without damaging it.

Instead, larger hailstones cause severe damage to the bodywork, obliging the owner to make costly repairs.

Car drivers usually try to protect their cars by sheltering under bridges, flyovers or arcades in the vicinity.

Sometimes it is not possible to put the car into shelter either due to the lack of shelters in the vicinity or because the traffic conditions do not allow the driver to reach any shelter.

A protection shield for cars having the features of the preamble of claim 1 is known from DE 76 05 886 U. The structure of said shield has, along its length, only longitudinal rods interconnected at their ends by means of downward extending transversal rods which are supported by extra vertical studs to be connected to the bumper of the car.

To overcome all the above inconvenient aspects a new anti-hail protection for cars has been studied and made.

The main aim of the new anti-hail protection is to protect the car against hail, irrespective of whether there are suitable sheltered places in the vicinity.

Another aim of the new anti-hail protection is to allow rapid and simple assembly and arrangement on the car to be protected.

A further aim of the new anti-hail protection is to allow convenient storage in the luggage compartment when it is not in use.

These and other direct and complementary aims are achieved by the new anti-hail protection for cars according to claim 1, comprising a structure of rods to which is fixed a close-meshed net such as to cover the whole car.

The structure of rods can be folded or dismantled and is provided with suckers, magnets or other systems for applying it on the roof of the car.

Along the edge, the net is provided with elastic cords with hooks for fixing it to the lower edges of the car.

The characteristics of the new anti-hail protection will be better explained by the following description with reference to the drawing enclosed purely as an example without limitation.

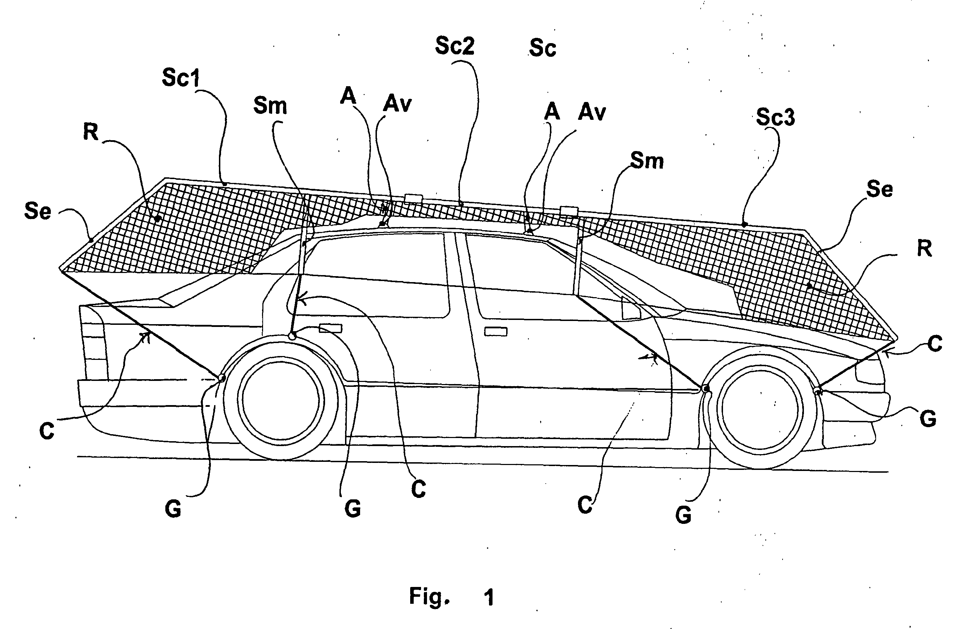

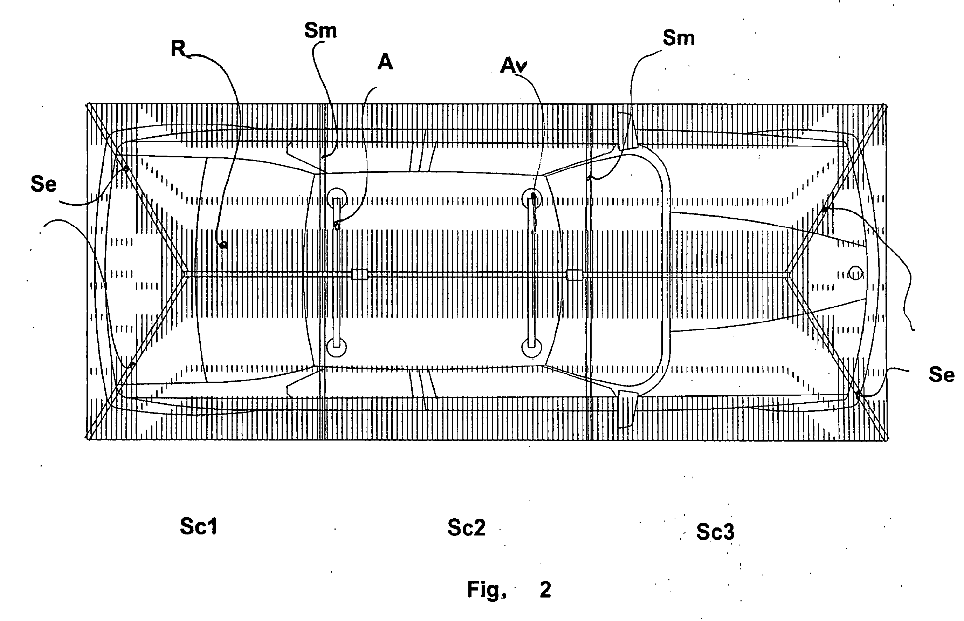

Figure 1 illustrates a side view of the new protection applied on a car while figure 2 illustrates its plan view.

The new anti-hail protection comprises a structure (S) composed of various elements (Sc, Se, Sm), applicable on the car roof, and a close-meshed net (R).

The structure (S) is composed of various rods (Sc, Se, Sm) fitted together. In particular the rods (Sc, Se, Sm) of said structure are arranged, when open, in a general double Y conformation, that is they comprise a central rod (Sc) on which are applied two diverging rods (Se) at each of the two ends and side rods (Sm) in generally intermediate positions.

The central rod (Sc) has a length indicatively equal to the length of the car, while each of the diverging rods (Se) and the side rods (Sm) cover a width indicatively equal to half the width of the car.

The central rod (Sc) is supported by two or more brackets (A), in the shape of an upside-down U, equipped with elements (Av), typically suckers or magnets, suited to allow the stable and removable application of the structure (S) on the roof of the car.

The diverging rods (Se) and the side rods (Sm) are fitted onto the central rod (Sc). When the new anti-hail protection shield is applied on the car, the diverging rods (Se) and the side rods (Sm) are pointing laterally or towards the comers of the car and anyway generally pointing downwards.

It is contemplated that said central rod (Sc) can be folded or dismantled in two or more parts (Sc1, Sc2, Sc3) in order to reduce its bulk when the new anti-hail protection is not being used.

On said structure (Sc, Se, Sm) is applied the close-meshed net (R) composed of a net of light, resistant plastic.

This net (R) is joined preferably only to the diverging rods (Se) and the side rods (Sm) so as to remain raised above the roof of the car and to be arranged also around the car itself.

On the edge of the net (R) there are elastic cords (C) ending with hooks (G) so as to allow the edge of the net (R) to be fixed to the mudguards or to other parts of the car.

When it is necessary to protect the car against hail it is sufficient to take the new anti-hail protection, for example from the luggage compartment, apply the central rod (Sc) with the respective brackets (A) on the roof of the car, arrange and fit the various central (Sc), end (Se) and side (Sm) rods so that the net (R) is correctly arranged on the car, and finally fasten the hooks (G) of the elastic cords (C) to the mudguards or to other parts of the car so as to keep the net (R) and the rods (Sc, Se, Sm) of the structure relatively taut.

When the new anti-hail protection is no longer necessary it is sufficient to release the hooks (G) of the elastic cords (C), remove the central rod (Sc) and the brackets (A) from the roof of the car and fold the new anti-hail protection to put it back in the luggage compartment.

The new anti-hail protection composed as described above allows the car to be completely protected against hail.

In fact, the rods (Sc, Se, Sm) of the new protection keep the net (R) sufficiently taut and distanced from the car bodywork. The hailstones, even large ones falling at high speed, are stopped by the net (R).

The application and removal of the new anti-hail protection are very fast and easy, allowing the new anti-hail protection to be applied with sufficient speed in the event of hail, and allowing it to be put away equally speedily when it is no longer necessary.

A further protection against sun may be applied on said structure of rods and anti-hail net. Said protection consists of a cloth of a size large enough to cover all or part of the net and possibly even to project from the net.

Said cloth may be entire or preferably provided with seams and cuts to allow the escape of the air which may be even violently moved by the wind.

## Claims

1. Anti-hail protection for cars comprising a structure of rods (Sc, Se, Sm) joined to a film and/or a close-meshed net (R), wherein said structure of rods (Sc, Se, Sm) is composed of a central rod (Sc) having at each end two diverging rods (Se), pointing towards the corners of the car,
**characterised in that** the central rod (Sc) is fitted with brackets on the bottom (A) equipped with suckers or magnets (Av) for applying it on the roof of the car, wherein in intermediate positions of said structure one or more pairs of side rods (Sm) are provided pointing towards the perimeter of the car.

2. Anti-hail protection according to claim 1, wherein the central rod (Sc) is composed of two or more semi-rods (Sc1, Sc2, Sc3) fitted together and/or to said brackets (A).

3. Anti-hail protection according to claim 1 or 2, wherein the diverging rods (Se) are hinged or fitted onto the heads of the central rod (Sc) or of the central semi-rods (Sc1, Sc2, Sc3).

4. Anti-hail protection according to any of the preceding claims, **characterised in that** it has elastic cords (C) with hooks (G) on the edge of the film and/or net (R) suited to secure said edge of said net (R) to the car bodywork.

5. Anti-hail protection according to any of the preceding claims, **characterised in that** it has a sun screen cloth placed on top of said net (R).

6. Anti-hail protection according to claim 5, wherein said cloth is composed of several stitched elements and/or provided with cuts and/or seams to allow the escape of air.

## Patentansprüche

1. Hagelschutzvorrichtung für Kraftwagen, umfassend eine aus Stangen (Sc, Se, Sm) zusammengesetzte Struktur, die mit einer Folie und/oder einem engmaschigen Netz (R) verbunden ist, wobei die Struktur aus den Stangen (Sc, Se, Sm) eine zentrale Stange (Sc) hat, die an jedem Ende zwei divergierende Stangen (Se) trägt, die in Richtung auf die Ecken des Kraftwagens weisen, **dadurch gekennzeichnet, dass** die zentrale Stange (Sc) an der Unterseite auf Stützen (A) aufliegt, die mit Saugnäpfen oder Magneten (Av) zu ihrer Befestigung auf dem Fahrzeugdach ausgerüstet sind, wobei in Zwischenpositionen der Struktur ein oder mehr Paare von seitlichen Stangen (Sm) vorgesehen sind, die zum Außenrand des Kraftwagens weisen.

2. Hagelschutzvorrichtung nach Anspruch 1, **dadurch gekennzeichnet, dass** die zentrale Stange (Sc) aus zwei oder mehr Teilstangen (Sc1, Sc2, Sc3) zusammengesetzt ist, die miteinander und/oder mit den Stützen (A) verbunden sind.

3. Hagelschutzvorrichtung nach Anspruch 1 oder 2, **dadurch gekennzeichnet, dass** die divergierenden Stangen (Se) an Köpfen der zentralen Stange (Sc) bzw. der zentralen Teilstangen (Sc1, Sc2, Sc3) befestigt oder angelenkt sind.

4. Hagelschutzvorrichtung nach einem der vorhergehenden Ansprüche, **dadurch gekennzeichnet, dass** diese elastische Leinen (C) mit Haken (G) am Rand der Folie oder des Netzes (R) aufweist, die dazu dienen, den Rand des Netzes (R) an der Fahrzeugkarosserie zu fixieren.

5. Hagelschutzvorrichtung nach einem der vorhergehenden Ansprüche, **dadurch gekennzeichnet, dass** auf der Oberseite des Netzes (R) ein Sonnenschutztuch vorgesehen ist.

6. Hagelschutzvorrichtung nach Anspruch 5, **dadurch gekennzeichnet, dass** das Tuch aus mehreren, miteinander vernähten Elementen zusammengesetzt ist und/oder Einschnitte und/oder Nahtfugen hat, die ein Entweichen von Luft ermöglichen.

## Revendications

1. Dispositif de protection contre les chutes de grêle pour véhicules automobiles comprenant une structure de barres (Sc, Se, Sm) reliée à un film et/ou un filet à mailles serrées (R), ladite structure de barres (Sc, Se, Sm) présentant une barre centrale (Sc) qui porte à chaque extrémité deux barres divergentes (Se) dirigées vers les coins du véhicule, **caractérisé par le fait que** la barre centrale (Sc) repose par sa surface inférieure sur des supports (A) équipés de ventouses ou d'aimants (Av) pour leur fixation sur le toit du véhicule, une ou deux paires de barres latérales (Sm), prévues dans des positions intermédiaire de la structure, étant dirigées vers le bord extérieur du véhicule.

2. Dispositif selon la revendication 1, **caractérisé par le fait que** la barre centrale (Sc) se divise en deux ou plusieurs barres partielles (Sc1, Sc2, Sc3) reliées entre elles et/ou avec les supports (A).

3. Dispositif selon la revendication 1 ou 2 , **caractérisé par le fait que** les barres divergentes (Se) sont fixées ou articulées à des têtes de la barre centrale (Sc) ou des barres partielles (Sc1, Sc2, Sc3).

4. Dispositif selon une des revendications précédentes, **caractérisé par le fait qu'**il présente, au bord du film ou du filet (R), des lanières élastiques (C) avec des crochets (G) qui servent à fixer le bord du filet (R) à la carrosserie du véhicule.

5. Dispositif selon une des revendications précédentes, **caractérisé par le fait que** sur la surface supérieure du filet est prévu un pare-soleil.

6. Dispositif selon la revendication 5., **caractérisé par le fait que** le pare-soleil est composé de plusieurs éléments cousus ensemble et/ou présente des échancrures et/ou des ouvertures dans la couture facilitant l'évacuation de l'air.
